(19) Europäisches Patentamt
European Patent Office
Office européen des brevets

(11) **EP 3 113 079 A1**

(12) **EUROPEAN PATENT APPLICATION**

(43) Date of publication:
**04.01.2017 Bulletin 2017/01**

(51) Int Cl.:
**G06K 9/46** (2006.01)   **G06K 9/00** (2006.01)
**G08G 1/0962** (2006.01)

(21) Application number: **16177346.0**

(22) Date of filing: **30.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.07.2015 BE 201505423**

(71) Applicant: **CNH Industrial Belgium nv
8210 Zedelgem (BE)**

(72) Inventors:
• **Houthooft, Rein
9820 Merelbeke (BE)**
• **Verstichel, Stijn
9750 Zingem (BE)**
• **Debilde, Benoit
8000 Brugge (BE)**
• **Foster, Christopher A.
Mohnton, Pennsylvania 19540 (US)**

(74) Representative: **CNH Industrial IP Department
Patent Department,
Leon Claeysstraat 3A
8210 Zedelgem (BE)**

(54) **A CONTROLLER FOR A WORKING VEHICLE**

(57) A controller (100) configured to receive image data (102) representative of the surroundings of a working vehicle. The image data (102) comprises a plurality of portion data. The controller (100) determines (104) one or more features associated with each of the plurality of portion data. For each of the plurality of portion data, the controller (100) applies (106) a label-attribution-algorithm to attribute one of a plurality of predefined labels to the portion data in question based on: (i) features determined for the portion data in question; and (ii) features determined for proximate portion data, which is portion data that is proximate to the portion data in question. The labels are representative of objects. The controller (100) provides a representation (110) of the attributed labels and their position in the received image data (102).

EP 3 113 079 A1

**Description**

**Summary of the Invention**

According to a first aspect, there is provided a controller configured to:

receive image data representative of the surroundings of a working vehicle, the image data comprising a plurality of portion data;
determine one or more features associated with each of the plurality of portion data;
for each of the plurality of portion data, apply a label-attribution-algorithm to attribute one of a plurality of predefined labels to the portion data in question based on:

(i) features determined for the portion data in question; and
(ii) features determined for proximate portion data, which is portion data that is proximate to the portion data in question,

wherein the labels are representative of objects; and
provide a representation of the attributed labels and their position in the received image data.

Such a controller can enable the surroundings of the working vehicle to be identified and labelled efficiently and effectively, and in some examples accurately and quickly enough for the representation of the attributed labels and their position in the received image data to be output such that they can be used to control the working vehicle, or can be fed back to an operator of the working vehicle, in real-time.

The working vehicle may be an agricultural vehicle, a construction vehicle, or an off-road vehicle.

The received image data may comprise video data. The controller may be configured to provide as an output, in real-time, a representation of the labels and their position in the received video data. The controller may be configured to: (a) determine the one or more features; (b) apply the label-attribution-algorithm and (c) provide the representation of the attributed labels and their position in the received image data in less than 0.1s, 0.5s or 1 second.

The controller may be further configured to control the working vehicle in accordance with the labels attributed to the plurality of portion data. The controller may be configured to set a machine operating parameter of the working vehicle in accordance with the labels attributed to the plurality of portion data. The controller may be configured to cause a feedback component to provide feedback to an operator of the working vehicle in accordance with the labels attributed to the plurality of portion data.

The controller may be configured to apply the label-attribution-algorithm to attribute one of the plurality of predefined labels to the portion data in question based on: one or more labels associated with the proximate portion data.

The label-attribution-algorithm may comprise an energy based model. The label-attribution-algorithm may be configured to perform semantic object detection.

The controller may be configured to: receive training image data and associated user-selected-predetermined-label data; and apply a machine-learning-algorithm to the label-attribution-algorithm based on the received training image data and user-selected-predetermined-label data, in order to set one or more parameters of the label-attribution-algorithm.

The portion data may comprise pixel data or super-pixel data.

The image data may comprise pixel data. The controller may be configured to perform a clustering-algorithm to determine each of the plurality of portion data. Each portion data may comprise a plurality of neighbouring pixel data that satisfy a similarity metric.

The controller may be configured to determine one or more features associated with the pixel data, and associate the one or more features of the pixel data with the corresponding portion data.

The controller may be configured to provide the representation of the labels and their position in the received image data as an overlay to the received image data.

The image data may comprise one or more of: stereo vision data; RGB / colour data; depth data; radar data; laser data; and 3-dimensional data.

The controller may be configured to attribute a predefined label to the portion data in question based on: features determined for the proximate portion data, wherein the portion data that is proximate to the portion data in question comprises neighbouring portion data and / or spaced apart portion data.

The features may comprise gradient-based features and / or colour-based features.

The label-attribution-algorithm may be configured to also attribute a confidence level to the label attributed to each of the plurality of portion data.

The label-attribution-algorithm may be configured to:

attribute a secondary predetermined label to one or more of the plurality of portion data, along with a confidence level associated with each secondary label; and

provide a representation of the one or more secondary labels and their position in the received image data.

The controller may be further configured to control the working vehicle in accordance with:

the labels attributed to the plurality of portion data; and
the confidence levels associated with the labels.

The predetermined labels may be mutually exclusive.

There may be provided a method of labelling image data, the method comprising:

receiving image data representative of the surroundings of a working vehicle, the image data comprising a plurality of portion data;
determining one or more features associated with each of the plurality of portion data;
for each of the plurality of portion data, applying a label-attribution-algorithm to attribute one of a plurality of predefined labels to the portion data in question based on:

(i) features determined for the portion data in question; and
(ii) features determined for proximate portion data, which is portion data that is proximate to the portion data in question,

wherein the labels are representative of objects; and
providing a representation of the labels and their position in the received image data.

There may be provided a method of controlling a working vehicle, the method comprising:

performing any method of labelling image data disclosed herein in order to provide a representation of the labels and their position in the received image data; and
controlling a working vehicle in accordance with the representation of the labels and their position in the received image data.

There may be provided a computer program, which when run on a computer, causes the computer to configure any apparatus, including a controller, vehicle or apparatus disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

## Brief Description of the Drawings

Embodiments of the present invention will now be described by way of example and with reference to the accompanying drawings in which:

Figure 1 schematically illustrates an example controller associated with a working vehicle; and
Figure 2 schematically illustrates a conditional random field (CRF) as a factor graph.

## Detailed Description of the Drawings

One or more examples disclosed herein relate to a model designed for vision in autonomous vehicles. This can allow the vehicle to understand its environment in terms of semantic objects, for example, uncut crops, trees, animals, etc. The model can take as input camera data, for which each image frame is segmented into different categories. Rather than being hand-coded, the classification model can be trained on historical data, which it can generalize to make predictions for unseen data. The model can thus allow the vehicle to sense its environment in terms of objects, on which it can react in different fashions.

Embodiments disclosed in this document can allow intelligent data analysis of camera information originating from a vehicle-mounted visual system, or from a stationary-mounted visual system. Such a stationary-mounted visual system may include one or more sensors mounted on a building that overlooks an agricultural field, as a non-limiting example. The results of such analysis can act as an enabler for autonomous harvesting behaviour for agricultural vehicles. As an intermediate step, the results of the analysis could be used as a driver assistance system to highlight objects in the machine's path or in its surroundings, thereby increasing machine safety.

Examples disclosed herein relate to working vehicles, or components of working vehicles. The working vehicle may be an agricultural vehicle, a construction vehicle or an off-road vehicle, for example. The working vehicle can include a sensor that generates data representative of the surroundings of a working vehicle. The data can be image data, and can include one or more of the following non-limiting examples: RGB / colour data; video data, stereo vision data; depth data; radar data; laser data; 3-dimensional data; and any other data that is representative of the surroundings of the working vehicle. The sensor can be any type of senor that can generate one or more of these types of data, including a camera.

The working vehicle can have one or more machine operating parameters, which relate to the machine's function. For example, for a combine harvester, the machine operating parameters can include ground speed, rotor speed, concave clearance, fan speed, and sieve opening. One or more actuators can be set in accordance with these machine operating parameters in order to control the working vehicle. Also, the working vehicle can include a feedback component for providing feedback to an operator of the working vehicle. The feedback component may be a display screen, a touch screen, a loudspeaker, or any other audio or visual component.

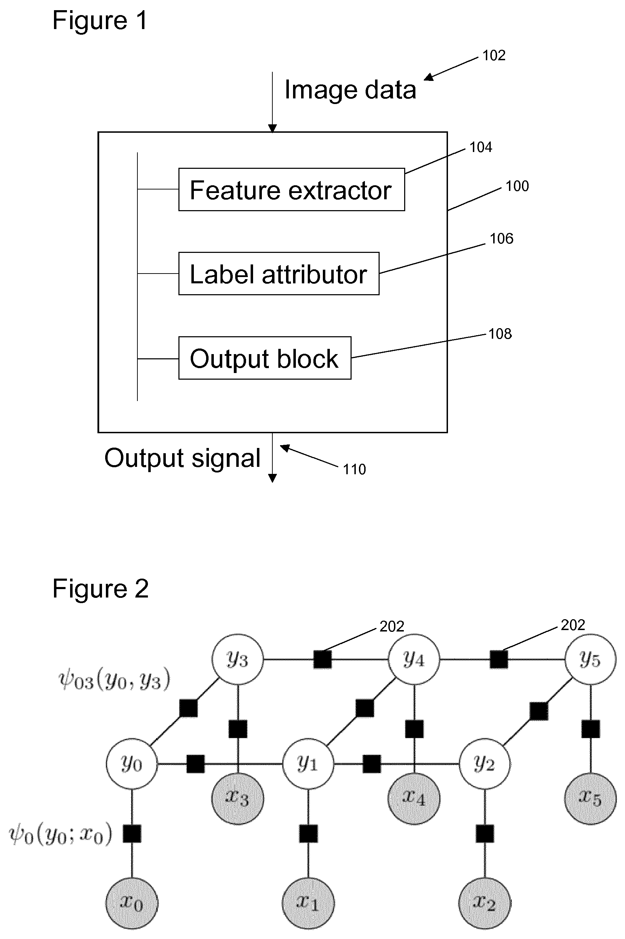

Figure 1 illustrates schematically a controller 100 associated with a working vehicle. The controller receives image data 102. The image data is representative of the surroundings of the working vehicle. The controller 100 provides, as an output signal 110, a representation of objects that have been identified in the image data. The output signal 110 may comprise the representation of the labels and their position in the received image data as an overlay to the received image data 102. As will be discussed below, this representation of labels / objects can be used to efficiently and effectively control the working vehicle. For example to react in a certain way for specific objects or for displaying to an operator of the working vehicle.

The image data 102 comprises a plurality of portion data, which may be individual pixels, or groups that include a plurality of pixels. Such groups may be referred to as clusters or super-pixels. As discussed below, use of super-pixels can reduce the processing overhead of the controller 100, and therefore enable processing to be performed particularly quickly. Super-pixels / clusters can comprise a plurality of neighbouring pixel data that satisfy a similarity metric.

The controller 100 includes a feature extractor block 104 that can determine one or more features associated with each of the plurality of portion data in the image data. As discussed below, one or both of gradient-based and colour-based features can be determined / extracted. For example, the known DAISY algorithm can be used to extract gradient-based features. The features represent meaningful parameters of the portion data and they can be used to subsequently enable differentiation between objects that are represented in the image data. The features can be represented as codewords in the context of a "bag-of-words" model, which may comprise clustered feature vectors, as discussed in more detail below.

The controller 100 also includes a label attributor block 106, which, for each of the plurality of portion data, can apply a label-attribution-algorithm to attribute one of a plurality of predefined labels to the portion data. The predefined labels are representative of objects, and may be "grass", "sky", "tractor", "uncut crop", "cut crop", "building", "tree" for example. The predefined labels can be mutually exclusive. The label-attribution-algorithm attributes a predefined label to the portion data based on:

(i) features (such as a bag of words representation) determined for the portion data in question; and

(ii) features (such as a bag of words representation) determined for portion data that is proximate to the portion data in question (this data may be referred to as "proximate portion data").

The label-attribution-algorithm can attribute a predefined label to the portion data based on labels that have been attributed to the proximate portion data. This can be considered as indirectly processing features determined for the proximate portion data, because the labels for the proximate portion data are themselves determined based on features associated with the proximate portion data.

Such proximate portion data can include portion data that shares a boundary with the portion data in question (which may be referred to as a first neighbour), and portion data that is spaced apart from the portion data in question (which may be referred to as a second, third or higher order neighbour). In some examples, "proximate portion data" can be any portion data that are at less than a predetermined distance from the portion data in question; for example less than 2%, 5% or 10% of an image-dimension from the centre of the portion data in question. The image-dimension may be a horizontal or vertical dimension of the image, and may be the smaller of the dimension of the image in its horizontal and vertical dimensions.

Using the "proximate portion data" can enable a predefined label to be more accurately and reliably assigned. This is because the context of the portion data in question can be taken into account when assigning the label. This type of algorithm can be especially useful when the application requires the detection of both regular objects and irregular objects, which can include regular 'foreground' objects and irregular 'background' objects.

In one example, the algorithm can be more likely to attribute a label of "sky" to portion data that has proximate portion data that also has attributed labels of "sky". That is, a confidence level for a specific label can be increased based on labels / features of proximate portion data. Also, the algorithm can be less likely to attribute a label of "tractor" to portion data that has proximate portion data that has attributed labels of "sky". That is, a confidence level for a specific label can be decreased or increased based on labels / features of proximate portion data.

The controller 100 in this example includes an output block 108 that provides an output signal 110 that is a representation of the labels that have been attributed to the portion data, and their position in the received image data 102. This output signal 110 can be used to control the working vehicle, for example to identify and locate objects: (i) that should be avoided (including buildings and trees); (ii) that should be targeted (such as uncut crop); and (iii) that do not matter to the operation of the working vehicle (such as sky, cut crop). The working vehicle can then be controlled in accordance with the labels attributed to the plurality of portion data, which represents the location of these types of objects. For example, the controller can set a machine operating parameter of the working vehicle, or can cause a feedback component to provide feedback to an operator of the working vehicle.

Use of the feature extractor 104 and the label attributor 106 can enable a semantic perception model to be determined, that partitions the environment represented by the image data 102 into different classes and allows for further processing in higher level reasoning tasks. This processing represents more than simply detecting obstacles and identifying traversable regions. As discussed in more detail below, empirical results have shown that the controller 100 can semantically segment previously unseen video data quickly enough to enable real-time processing of the output signal to control the working vehicle in an improved way. For example, in less than about 0.1s, 0.5s or 1s. Such processing can be fast enough to enable the working machine to react before something bad happens, such as before the machine collides with an immovable object. The advanced perception that is achieved by the controller 100 can play a key role in understanding the surrounding environment, and better controlling the vehicle in accordance with the understanding of the environment.

In some examples, a machine-learning-algorithm can be applied to the label-attribution-algorithm in order to refine one or more parameters of the label-attribution-algorithm. The machine-learning-algorithm can be applied offline, for example on training data in advance of the controller being used to label objects in image data that is received from a camera in real-time. The machine-learning-algorithm is a structured machine learning algorithm in some examples. The machine-learning-algorithm can be applied in accordance with test-image-data and associated labels that have been manually selected by a user (as represented by user-selected-predetermined-label data). Use of a machine-learning-algorithm can increase the accuracy with which objects are labelled by the label-attribution-algorithm. Also, in some examples, the machine-learning-algorithm can be used to define the one or more parameters of the label-attribution-algorithm based solely on the test-image-data.

In some examples, the machine-learning-algorithm can update the one or more parameters of the label-attribution-algorithm based on image data received whilst the controller automatically attributing labels to received image data. For example, the controller may automatically recognise that portion data in received image data has not been attributed an adequate label (for example because a confidence level associated with the label is below a threshold level). The controller can then automatically cause the associated image data (which can be referred to as refinement-image-data) to be sent to a remote computer (for example wirelessly via a server on the "cloud"), such that a user of the remote computer can manually select labels for the received refinement-image-data. The controller can also automatically cause the label-attribution-algorithm to be sent to the remote computer for updating. The remote computer can then apply the machine-learning-algorithm to the label-attribution-algorithm, based on the refinement-image-data and the associated labels that have been manually selected by a user, in order to refine one or more parameters of the label-attribution-algorithm. The controller can then receive the refined label-attribution-algorithm back from the remote computer (again, optionally wirelessly), so that a machine associated with the controller can operate in an improved way. By way of example, such processing can be useful where the controller receives image data representative of a type of tree that was not included in the original test-image-data. Without this additional processing, the controller may not be able to correctly attribute a "tree" label to the newly encountered type of tree.

One or more of the examples disclosed herein can relate to an autonomous vehicle perception system, which is not bound by static algorithms that are sensor-dependent. Moreover, the vehicle environment can be represented as semantic objects, which allow for further processing by high-level reasoning tasks, for example to determine whether or not the vehicle should stop, depending on the type of the detected object.

The following discussion relates to a specific implementation of the controller of figure 1, and includes some additional, optional, processing.

*INTRODUCTION*

Off-road settings present many challenges to autonomous vehicle operation due to the lack of structured elements in the scene. By going further than the identification of traversable / non-traversable regions and standard object detection, it is possible to approach environmental sensing in a semantic fashion. This disclosure presents a semantic perception model for off-road (optionally autonomous) vehicles based on image segmentation. By solely relying on 2-D images and video, the system can be very generic and can be applied in many domains. Moreover, this can allow use of external datasets as additional training data.

Two types of object recognition in perception include: segmentation models and bounding box models. Bounding box models draw a bounding box around detected objects. Although this can perform very well in terms of recognizing objects that have a regular shape, their performance can drop when irregular regions such as the sky, grass or water, have to be identified. For this type of environment, segmentation models can be advantageous because they can label every individual pixel, rather than drawing a box around a detected object. Because off-road scenes are made up of many irregular shapes, for example bushes and dirt, the segmentation approach can fit best.

As discussed below, for testing an off-road vehicle was equipped with a high bandwidth connection, linked to an RGB 3DV Vislab CS4 vision sensor. This sensor recorded images at a 1280x960 resolution and a field of vision of 43 degrees. Moreover, some of the data was captured with a PointGrey Bumblebee sensor at a resolution of 320x240. Additionally, for tracking purposes, the vehicle was equipped with a GPS device.

In this example, the controller implements a model that encodes the conditional distribution of the pixel labels via an energy-based model. This model is optimized using a max-margin learning approach that tunes all model parameters simultaneously, using an ontological loss function. After training, the model allows for effective and efficient inference using graph cuts inference by means of $\alpha$-expansion, obtaining accurate semantic labels for each pixel.

*SUMMARY*

This example is related to classification (labelling) of objects in different categories in an agriculture environment, which can be used as an input to control an autonomous agricultural vehicle. The classification algorithm is based on super-pixel features and takes into account the class of neighbouring super-pixels (which is how the context is introduced, for example, a pixel surrounded by "grass" pixels is more probably also be a "grass" pixel than a "sky" pixel). Some more high-level details on the algorithm and the different steps of the method:- (1) the method uses a super-pixel algorithm (SLIC) to regroup similar neighbour pixels in a super-pixel to reduce calculation time and complexity; - (2) then an algorithm extracts features from those super-pixels (for example DAISY features and/or colour features); - (3) regroup those features using clustering method and the bag-of-words method to have a similar description (description of the same dimension) of every super-pixel;- (4) during a training mode of operation, those features are then used as input by a machine learning algorithm to learn to classify each super-pixel; - (5) after training the algorithm on a set of labelled images (images where a user has manually classified every pixel in its category (for example tractor, ground, sky, human, barrel, ...)), this algorithm can be used to classify new images.

This functionality can allow higher-level processing of the detected objects in the vehicle's visual field. This can be used for a more intelligent autonomous feedback loop, for example, to intelligently steer the vehicle around objects or to steer it towards uncut crops/grass. A map of the field could be created on-the-go by combining camera output and GPS signal. The controller could be used as part of a driver assistance system to highlight objects in the machine's path, thereby increasing machine safety. Fast features extraction algorithms can be used, which can be an advantage for real-time implementation.

*PRE-PROCESSING*

A pre-processing pipeline can optionally be used before attaining a semantic object labelling. Firstly, an over-segmentation approach is described, and then a feature extraction process. It will be appreciated that both procedures are dependent on the specific images at hand. In some examples, received image data 102 is resized to a predetermined image dimension. For example it can be downscaled to a maximum width of pixels, in some implementations without altering the aspect ratio. In this example the maximum width of pixels is 320.

*A. Over-segmentation*

Image segmentation can be used to determine portion data that comprises clusters or super-pixels, each of which corresponds to a plurality of individual pixels in the image data.

In image segmentation, the goal is to label all image pixels with a particular semantic class. Doing this for every pixel independently can be computationally very challenging. Therefore, in this example the controller constructs an over-segmentation of the image by defining super-pixels. For this, the controller can use the known SLIC algorithm, which defines a grid on top of the image that forms the starting point of different clusters. More specifically, SLIC clusters input pixels in a 5-D space composed of the L-, a-, and b-values of the CIELAB colour space, and the x- and y-coordinates. In this way, a super-pixel can comprise coordinate data and intensity data. The constructed grid serves as a base for K different clusters, forming K super-pixels. Hence, there is approximately one super-pixel at every point $S = \sqrt{N}/K$ (where N is the image width or height, assuming a square image), according to the regular grid layout. The clustering / segmentation algorithm in this example makes use of a sum of two distances in two different spaces. The first is the (L, a, b) coordinate system, the second is the position space (x, y). The total cluster distance is a weighted sum of these two distances. These weights allow for tuning the compactness and fuzziness of the super-pixel boundaries. The controller can run an expectation-maximization algorithm until the clusters have evolved such that some convergence criterion is met.

### B. Feature extraction

In this example, both gradient- and colour-based features are used. The controller applies the known DAISY algorithm to extract gradient-based features. This algorithm builds a gradient histogram of the neighbourhood of a pixel, after the image has been converted to grey-scale, leading to a 100-D feature vector. As colour-based features, the controller can simply extract the RGB colours from each pixel, leading to a 3-D feature vector. To reduce the feature extraction complexity, the process can be sub-sampled by running the extraction algorithm not on every pixel, but on a regular image grid.

Because super-pixels vary in size and do not necessarily align with the grid-based feature extraction process, the number of features each super-pixel contains can vary. To obtain a uniform input representation, all gradient and colour features can be k-means clustered into 200 gradient and 100 colour features. The cluster centres form so-called words, which enables the controller to use a bag-of-words principle. After the words have been formed, all super-pixels are assigned those features that reside inside their region. Then, these features are approximated by casting it to their closest, in terms of Euclidean distance, cluster centre. Hereafter, the controller determines / builds a histogram that counts the number of occurrences of each of the 200 and 100 words, for each distinct super-pixel. Now, a uniform representation can be obtained for each super-pixel by concatenating those two histograms into one 300-D vector. In this example, the 300-D vector is an input to the label-attribution-algorithm / model.

In other examples, the DAISY and colour features extraction algorithms could be replaced by other features extraction algorithms, such as SIFT, SURF, GLOH, etc.

### STRUCTURED PREDICTION

As indicated above, machine learning can be used to set / refine one or more parameters of the label-attribution-algorithm, which will subsequently be used to attribute a label to each super-pixel. The label-attribution-algorithm will attribute the labels based on, in some examples amongst other things, the features that have been extracted for the super-pixels.

Traditional machine learning models can predict a single output label for classification, using a function $f : x \rightarrow y$.

In contrast, structured prediction models can output objects with arbitrary structure. In this example, this arbitrary structure is a vector, and the domain $y = \{1,...,k\}^n$, with $n$ the variable number of super-pixels present in the image at hand, and k a natural number. Structured models obtain the predicted value $f(x)$ by maximizing a so-called compatibility function $g : \mathcal{X} \times \mathcal{Y} \rightarrow \mathbb{R}$,

$$f(x) = \arg\max_{y \in \mathcal{Y}} g(x, y),$$

(1)

which we call inference. In this example, the controller uses a linearly parameterised function $g(x,y) = \langle w, \Psi(x,y) \rangle$, in which $w$ is learned from data and $\Psi(x; y)$ is a joint feature vector of x and $y$, for example based on features as explained above under the heading "Feature extraction". Because the domain $Y$ is very large, as it is a combination of label assignments to all super-pixels, $\Psi$ is defined in such a way that the underlying structure can be exploited. In this example, the controller ensures that $\psi$ identifies with a conditional random field (CRF) energy function for which efficient inference techniques, which maximize g, exist.

*A. Conditional random fields (CRFs)*

Conditional random fields (CRFs) are a type of probabilistic graphical model (PGM) that is the conditional variant of a Markov random field. A PGM defines a probability distribution in a compact way by highlighting and making explicit independences between random variables. A CRF in particular defines not the full joint distribution between all random variables, but the conditional distribution of the labels, given the input. This allows for tractable inference within the model.

Figure 2 illustrates CRF as a factor graph with observations $x_i$ and random variables for the labels $y_i$. The black rectangles 202 represent the factors/potentials, while nodes connected to them represent their arguments.

A CRF models the conditional distribution *p(y|x)*, with x a particular observation of pixels and y and assignment of labels in *Y*. This probability distribution can be written as

$$p(y|x) = \frac{1}{Z(x)} \prod_{F \in \mathcal{F}} \psi_F(y_F; x_F),$$

(2)

with

$$Z(x) = \sum_{y \in \mathcal{Y}} \prod_{F \in \mathcal{F}} \psi_F(y_F; x_F),$$

(3)

called the partition function, which makes sure that the distribution sums to one. Herein F represents the different factors. In this example, the controller links together the inter-label relations based on each super-pixel's neighbourhood.

The model as presented here can be split up into two types of factors, unary and pairwise factors:

$$p(y|x) = \frac{1}{Z(x)} \prod_{i \in V} \psi_i(y_i; x_i) \prod_{i,j \in E} \psi_{ij}(y_i; y_j)$$

(4)

for a CRF represented by a graph G = *(V; E)*, with V a set of nodes and E a set of edges. The unary terms $\psi_i(y_i; x_i)$ represent the relations between the input pixels or features $x_i$ and the label of a super-pixel $y_i$, while the pairwise terms $\psi_{ij}(y_i; y_j)$ represent the relations between neighbouring super-pixels.

As a specific example, $x_i$ may be a green super-pixel region for which $\psi_i$ has a large value for the label $y_i$ = *grass* and a low value for $y_i$ = *road*. In this model, $\psi_i$ represents a logistic regression classifier. The pairwise factors, $\psi_{i,j}$ determine the strength of a relation between neighbouring super-pixels. These factors are 'functions' that take two arguments (labels) as input, and output a value. If the two inputs are the same label, then the function output is a high value, if the two inputs are not the same label then the function output is a low value. Hence, the pairwise factors can create a smoothing effect by rewarding equal labels for neighbouring super-pixels. That is, the pairwise potentials can ensure that proximal and similar regions favour equal labels.

In some examples, the processing performed by the controller does not require a confidence level associated with any or all of the potential labels that may be associated with a super-pixel. For example, if only the identity of the most-likely label is required, then confidence levels may not be required for any of the potential labels, or perhaps may only be required for the most-likely label or the n most likely labels, where n is a predetermined integer.

In some examples, the label-attribution-algorithm can attribute a confidence level to the label attributed to each of the super-pixels. The label-attribution-algorithm can also attribute a secondary predetermined label to one or more of the plurality of super-pixels, along with a confidence level associated with each secondary label. The label-attribution-algorithm can then provide a representation of the one or more secondary labels and their position in the received image data. Such a representation can advantageously be used by the controller to control a working vehicle, for example. The working vehicle can be controlled in accordance with: the labels (and optionally the secondary labels) attributed to the plurality of super-pixels; and the confidence levels associated with one or more of the labels. In one example, the controller can control the working vehicle differently if: (a) the controller attributes a primary label of a "tree" and a secondary label of a "human", and (b) the controller attributes a primary label of a "tree" and a secondary label of a "fence", even though the primary label is the same for both cases. For example, the controller may cause the working vehicle to take more evasive action for case (a) than case (b).

Returning to this example, the CRF can be converted to an energy-based model by dropping the normalization requirement and defining energy potentials as

$$E_F(y_F; x_F) = -\log \psi_F(y_F; x_F)$$

As such, a CRF energy definition can then be obtained as

$$E(y; x) = \sum_{F \in \mathcal{F}} E_F(y_F; x_F) \tag{5}$$

Computing $y^* = \arg\max_{y \in \mathcal{Y}} p(y|x)$, called maximum a priori (MAP) inference, requires maximization of $p(y|x)$, which leads to the exact same optimization problem as computing the minimal value of $E(y;x)$.

To see the resemblance between CRFs and structured prediction, we linearly parametrise these factor energies as

$$E_F(y_F; x_F) = \langle w_F, \Psi_F(y_F, x_F) \rangle \tag{6}$$

If we simply paste together all parameters $w_F$ into one weight vector $w = (w_0^T, \dots, w_n^T)^T$, and similarly all $\Psi_F(y_F, x_F)$ features into one feature vector $\Psi(y,x)$, then we obtain

$$E(y; x) = \langle w, \Psi(y, x) \rangle \tag{7}$$

Herein, it can be noticed that $E(y;x) = - g(x,y)$, the structured prediction compatibility function g defined in the top of this section. As such, computing (1) is the same as performing MAP inference in the CRF model. Advantageously, the controller can use very efficient CRF MAP inference methods, such as the one explained below under the heading "Reasoning" in order to avoid the intractable computation of g over all y-values in Y.

In this example, $\Psi_F(y_F, x_F)$ is defined as the output of a logistic regression function. This classifier has been trained on the input features, and outputs a value between 0 and 1. This value can be interpreted as a local classification probability for each super-pixel independently. These probabilities serve as input features to the unary energies of the structured predictor.

### B. Learning

Learning in structured prediction can be performed efficiently when the compatibility function is parametrised linearly by means of max-margin learning methods. These have the advantage of being convex and computationally tractable. Moreover, they allow specifying various loss functions. In structured prediction a regularized structured risk is minimized, rather than the Bayes' risk:

$$R(w) + \frac{C}{N} \sum_{n=1}^{N} \Delta(y^n, f(x^n))$$

$$(8)$$

with $\Delta : \mathcal{Y} \times \mathcal{Y} \to \mathbb{R}$ the loss function, and R a regularization function. Due to the fact that this function has many steps, due to the loss function, gradient-based optimization techniques can be unusable. Therefore, the controller can minimise a convex upper bound of this function

$$w^* = \arg\min_{w \in \mathbb{R}^D} \frac{1}{2} \|w\|^2 + \frac{C}{N} \sum_{n=1}^{N} u(y^n, x^n, w)$$

$$(9)$$

with C a regularization parameter, N the number of training samples, and $u$ a function that extracts the maximal difference between the prediction loss and the energy loss for a data sample $(x^n, y^n)$, defined as

$$u(y^n, x^n, w) =$$
$$\max_{y \in \mathcal{Y}} [\Delta(y, y^n) - (E(y, x^n, w) - E(y^n, x^n, w))]$$

$$(10)$$

In this example, the controller optimizes this objective function via the n-slack cutting plane method, which reformulates the above optimization problem as

$$w^* = \arg\min_{w, \xi_1, \ldots, \xi_k} \frac{1}{2} \|w\|^2 + C \sum_{i=1}^{k} \xi_i$$

$$(11)$$

subject to (12)

$$E(y, x^n, w) - E(y^n, x^n, w) \geq \Delta(y, y^n) - \xi_i$$

$$(13)$$

with
$1 \leq i \leq k$ and $y \in y$. By doing this, the maximization function in (10) is translated into a multitude of linear constraints. Moreover, the objective function becomes quadratic in $w$. This enables the controller to apply quadratic optimization, for which various established optimisation libraries exist. A downside, however, is that the number of constraints explodes, due to the high dimension of $Y$. For this, the controller applies cutting plane optimization, in which a working set of constraints $W$ is kept. The controller starts by solving the optimization problem while $W = 0$, and iteratively adding additional constraints. Those constraints which are maximally violated, for each sample $(x^n, y^n)$, are added to $W$. This allows fast optimization at the start of the optimization procedure, while still obtaining strong results.

In this example, the controller applies a weighted ontological loss function, based on the distance between objects in an ontology, as

$$\Delta\left(y, y^{n}\right) = \frac{1}{K} \sum_{i=1}^{K} \theta_{y_i^n} \delta\left(y_i^n, y_i\right)$$

$$(14)$$

with K the number of super-pixels in an image. The weights $\theta_{y_i^n}$ were set to the inverse of the number of times a label is present in the training set, normalized over all labels. The function $\delta : \mathcal{Y} \times \mathcal{Y} \to \mathbb{R}^{+}$ represents the distance along the spanning tree defined by the ontology. As such, the loss of misclassification between two objects, e.g., a barrel that is classified as a pole, is lower than, for example, misclassifying a barrel as grass.

*C. Reasoning*

In order for the label-attribution-algorithm to infer a set of labels that maximally correspond to the input images, we use an inference technique developed for energy-based CRF formulations called $\alpha$-expansion. This technique outputs an approximate solution to (1), defined as in (5). $\alpha$ expansion breaks up the energy minimization problem into sequential sub-problems. In a sub-problem, the CRF nodes can potentially alter their label $y_i$ to a different (but fixed) label $\alpha$. Each sub-problem is converted into an auxiliary graph, of which the nodes and edges are constructed in such a manner that a graph cut results in an assignment of labels in which $y_i$ remains constant, or changes to $\alpha$. Because the edge weights are set to the CRF energies, finding a minimal cut corresponds to a labelling change that results in a minimal energy value.
Solving the sub-problems sequentially for different $\alpha$ values, yields an approximately optimal labelling. $\alpha$ expansion is an elegant solution to energy minimization in energy-based models for inference purposes, as it can use highly efficient min-cut/max-flow algorithms from the domain of graph theory.

## RESULTS

For the training of the model described above, a dataset based on outdoor images and recorded video data was constructed. This dataset contains 18 different classes which underwent a detailed manual labelling process. The test results are generated by running the trained model on novel video images obtained from an off-road environment.
Various video samples were obtained from the experiments. The video samples include five classes / labels, which can be colour coded in an overlay. In this example the classes are field, vehicle, mountains, trees/bushes, and sky.
Per image, the model / controller takes a time equal to the sum of: (a) the segmentation process, which takes about, per image, 0.18 s, (b) the downscaling, which takes about 0.02 s, (c) the feature extraction process, which takes about 0.45 s, (d) the generation of the graph structure, which takes about 0.02 s, (e) the unary potential generation, which takes about 0.01 s, and (f) the inference, which happens nearly instantly. Therefore, segmenting a novel image takes about 0.68 s in this example. Advantageously, this can be quick enough to allow for real-time usage. Furthermore, it is expected that the segmenting time of 0.68s can be reduced further by optimizing one or more of the algorithms.

TABLE 1

AVERAGE ACCURACY RESULTS (IN %) OVER ALL 5-FOLD CROSS-VALIDATION RUNS ON OUR OUTDOOR SEGMENTATION DATASET.

| | global | average | tree | ground | sky | mountains | object |
|---|---|---|---|---|---|---|---|
| CRF | 90 | 80 | 43 | 91 | 97 | 87 | 81 |
| unary | 89 | 68 | 20 | 95 | 96 | 72 | 58 |

TABLE II

AVERAGE ACCURACY RESULTS (IN %) OVER ALL 5-FOLD CROSS-VALIDATION RUNS ON OUR OUTDOOR SEGMENTATION DATASET.

|  | global | average | barrel | sign | tree | building | ground | sky | mountains | vehicle |
|---|---|---|---|---|---|---|---|---|---|---|
| CRF | 88 | 65 | 70 | 43 | 45 | 34 | 92 | 95 | 81 | 74 |
| unary | 87 | 49 | 50 | 3 | 23 | 15 | 95 | 96 | 73 | 55 |

In Table I and Table II, the accuracy results of 5-fold cross-validation are shown, based on the constructed dataset. The difference between simple unary classification and CRF classification is shown. Settings were: 400 super-pixels with a compactness of 7 and $\sigma = 1$, all super-pixels with less than 0.05% of the total number of pixels were removed, a 200-D DAISY feature vector, and a 100-D colour feature vector. DAISY feature extracted in a 15-pixel grid, colour features extracted in a 4-pixel grid. CRF was built using neighbouring super-pixel connections as edges. The regularisation parameter was set to C = 0.1 for the max-margin model, and to 1 for the unary logistic regression classifier (using L2-squared regularisation).

The test results show that the energy-based (CRF) model is qualitatively better than using a unary classifier. This is because regions are more accurately and consistently classified.

*Conclusion*

An off-road vehicle was equipped with visual sensors and a high-bandwidth perception system, which were used to gather an outdoor scene segmentation dataset. This dataset was used to train an energy-based model, which encodes the conditional label distribution of every pixel, via max-margin learning using an ontological loss function. Using an energy-based approach allows for very efficient and effective inference via graph cuts using $\alpha$-expansion. A whole-image (320x240 resolution) can be labelled in 0.68 s, which can allow for real-time processing. Qualitative and quantitative results indicate that the model described above is capable of offering highly accurate semantic object segmentation for outdoor scene understanding. This allows further processing of the environment in terms of semantics by means of higher-level reasoners.

**Claims**

1. A controller (100) configured to:

    receive image data (102) representative of the surroundings of a working vehicle, the image data (102) comprising a plurality of portion data;
    determine (104) one or more features associated with each of the plurality of portion data;
    for each of the plurality of portion data, apply (106) a label-attribution-algorithm to attribute one of a plurality of predefined labels to the portion data in question based on:

    (i) features determined for the portion data in question; and
    (ii) features determined for proximate portion data, which is portion data that is proximate to the portion data in question,

    wherein the labels are representative of objects; and
    provide a representation (110) of the attributed labels and their position in the received image data (102).

2. The controller (100) of claim 1, wherein the working vehicle is an agricultural vehicle, a construction vehicle, or an off-road vehicle.

3. The controller (100) of claim 1, wherein the received image data (102) comprises video data, and wherein the controller (100) is configured to provide as an output, in real-time, a representation of the labels and their position in the received video data.

4. The controller (100) of claim 1, further configured to control the working vehicle in accordance with the labels attributed to the plurality of portion data.

**5.** The controller (100) of claim 4, configured to set a machine operating parameter of the working vehicle in accordance with the labels attributed to the plurality of portion data.

**6.** The controller of (100) claim 4, configured to cause a feedback component to provide feedback to an operator of the working vehicle in accordance with the labels attributed to the plurality of portion data.

**7.** The controller (100) of claim 1, wherein the controller is configured to apply the label-attribution-algorithm to attribute one of the plurality of predefined labels to the portion data in question based on:

one or more labels associated with the proximate portion data.

**8.** The controller (100) of clam 1, wherein the label-attribution-algorithm comprises an energy based model.

**9.** The controller (100) of clam 1, wherein the label-attribution-algorithm is configured to perform semantic object detection.

**10.** The controller (100) of claim 1, wherein the controller (100) is configured to:

receive training image data and associated user-selected-predetermined-label data; and
apply a machine-learning-algorithm to the label-attribution-algorithm based on the received training image data and user-selected-predetermined-label data, in order to set one or more parameters of the label-attribution-algorithm.

**11.** The controller (100) of claim 1, wherein the image data (102) comprises pixel data, and the controller is configured to perform a clustering-algorithm to determine each of the plurality of portion data, wherein each portion data comprises a plurality of neighbouring pixel data that satisfy a similarity metric.

**12.** The controller (100) of claim 1, wherein the controller (100) is configured to provide the representation of the labels and their position in the received image data (102) as an overlay to the received image data (102).

**13.** The controller (100) of claim 1, wherein the label-attribution-algorithm is configured to also attribute a confidence level to the label attributed to each of the plurality of portion data.

**14.** The controller (100) of claim 13, wherein the label-attribution-algorithm is configured to:

attribute a secondary predetermined label to one or more of the plurality of portion data, along with a confidence level associated with each secondary label; and
provide a representation of the one or more secondary labels and their position in the received image data (102).

**15.** The controller (100) of claim 13 or claim 14, further configured to control the working vehicle in accordance with:

the labels attributed to the plurality of portion data; and
the confidence levels associated with the labels.

# Figure 1

Image data — 102

104

Feature extractor

100

Label attributor — 106

Output block — 108

Output signal — 110

# Figure 2

$\psi_{03}(y_0, y_3)$

202    202

$y_3$    $y_4$    $y_5$

$y_0$    $x_3$    $y_1$    $x_4$    $y_2$    $x_5$

$\psi_0(y_0; x_0)$

$x_0$    $x_1$    $x_2$

Europäisches
Patentamt

European
Patent Office

Office européen
des brevets

# EUROPEAN SEARCH REPORT

Application Number

EP 16 17 7346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/203959 A1 (KRIEL BRADLEY SCOTT [US] ET AL) 24 July 2014 (2014-07-24) * paragraph [0015] - paragraph [0019] * * paragraph [0031] - paragraph [0043] * * figures 1-4 * | 1-15 | INV. G06K9/46 G06K9/00 G08G1/0962 |
| A | ZHANG YU ET AL: "Semantic object segmentation via detection in weakly labeled video", 2015 IEEE CONFERENCE ON COMPUTER VISION AND PATTERN RECOGNITION (CVPR), IEEE, 7 June 2015 (2015-06-07), pages 3641-3649, XP032793860, DOI: 10.1109/CVPR.2015.7298987 * page 3641, paragraph Abstract * * figure 1 * | 1-15 | |
| A | US 2010/253541 A1 (SEDER THOMAS A [US] ET AL) 7 October 2010 (2010-10-07) * paragraph [0155] - paragraph [0156] * * paragraph [0079] - paragraph [0084] * * figures 32-37 * | 1-15 | |

TECHNICAL FIELDS
SEARCHED (IPC)

G06K
G08G

The present search report has been drawn up for all claims

| Place of search | Date of completion of the search | Examiner |
|---|---|---|
| The Hague | 9 August 2016 | Van der Zaal, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 7346

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2016

| Patent document cited in search report | Publication date | Patent family member(s) | Publication date |
|---|---|---|---|
| US 2014203959 A1 | 24-07-2014 | NONE | |
| US 2010253541 A1 | 07-10-2010 | CN 101872070 A | 27-10-2010 |
| | | US 2010253541 A1 | 07-10-2010 |

EPO FORM P0459

For more details about this annex : see Official Journal of the European Patent Office, No. 12/82